# EUROPEAN PATENT APPLICATION

(11) **EP 3 546 102 A1**
(43) Date of publication of application: **02.10.2019**
(21) Application number: 17873013.1
(22) Date of filing: 26.04.2017
(51) Int. Cl.: B23K 1/20, H01R 4/02

(54) **MICROWAVE DEVICE WELDING BASE BODY AND MICROWAVE DEVICE**

(30) Priority: 23.11.2016 CN 201611047335
(71) Applicant: Comba Telecom Technology (Guangzhou) Ltd., Guangzhou, Guangdong 510663 (CN); Comba Telecom Systems (China) Ltd., Guangzhou, Guangdong 510663 (CN); Tianjin Comba Telecom Systems Ltd., Tianjin 300192 (CN)
(72) Inventor: LIU, Peitao, Guangzhou Guangdong 510663 (CN); BU, Binlong, Guangzhou Guangdong 510663 (CN); YOU, Jianjun, Guangzhou Guangdong 510663 (CN); DUAN, Hongbin, Guangzhou Guangdong 510663 (CN); PENG, Lijing, Guangzhou Guangdong 510663 (CN)
(74) Representative: J A Kemp
(86) International application number: PCT/CN2017/081978
(87) International publication number: WO 2018/094965

(57) **Abstract**

The present invention relates to the field of welding technology. A welding base for a microwave device includes a cavity and a welding groove defined in the cavity. An inner sidewall of the welding groove is provided with at least one solder-receiving space, and the solder-receiving space extends in an angle with an inner side of the welding groove. In the solution of the invention, a solder-receiving space is defined in the inner side of the welding groove, so that part of the solder enters the solder-receiving space when welding, and the solder is stuck in the solder-receiving space after the solder is hardened, and the solder is not easily peeled off. The invention solves the technical problem that the welding joint of the existing microwave device welding scheme is not firm and the solder is easy to fall off.

## Description

### FIELD OF THE INVENTION

The present invention relates to the field of welding technology for mobile communication devices, and more particularly to a welding base for a microwave device and a microwave device using the welding base.

### BACKGROUD OF THE INVENTION

At present, microwave devices are often used in the field of microwave communication technology. Especially in the field of communication, the stability of electrical performance of microwave devices is very important. Microwave devices require connecting external cables, and among the existing material options for microwave device, aluminum alloys are commonly used, but aluminum alloy itself cannot be welded directly to the cable by welding. Therefore, it is often necessary to perform overall electroplating to the microwave device before welding. However, due to the high cost of electroplating the entire device itself and due to the part needed to be welded is only a small part, the cost is too high.

In order to solve the above problem, in the method, application method and connection structure of welding between a weldable conductor and non-weldable base of patent number CN201510515683.9, a scheme for spraying a weldable material on a microwave device is proposed to achieve welding between a weldable conductor and a non-weldable base.

However, in this prior art, there are the following problems: the phenomenon of solder falling off from the welding substrate is common, especially in surface welding or in welding at solder joints having welding grooves, the to-be-welded member is easy to fall off from the welding base carrying solder. For welding between the aluminum welding base and coaxial cable (the to-be-welded), coating is generally needed, usually by spraying a layer of copper in the welding groove of the aluminum-welding base, that is, copper coating. Although copper coating is done, connection between the aluminum base and coaxial cable is relatively strong after welding, and its vibration resistance and tensile strength are still weak. When the welding joint is subjected to large vibration or when the coaxial cable is pulled hard, the coaxial cable is easy to fall off from the welding groove of the welding base carrying solder.

It can be seen that the traditional welding is not strong, the reliability is poor, and there are potential safety hazards, and the stability of electrical performance of microwave devices cannot be ensured.

### SUMMARY OF THE INVENTION

The present invention aims to solve the technical problem that the welding point is not strong and the solder is easy to fall off in the welding method of a prior art microwave device, and provide a microwave device and a welding base thereof with simple structure and improved reliability of connection between a welding base and a to-be-welded member.

In order to achieve the above object, the present invention adopts the following technical solution.

A welding base for a microwave device includes a cavity and a welding groove defined in the cavity. An inner sidewall of the welding groove is provided with at least one solder-receiving space, and the solder-receiving space extends in an angle with an inner side of the welding groove, such that structure is formed that causes physical interference between solder and the welding groove after cooling and curing, thus blocking the movement of the solder relative to the welding groove, and preventing the solder and the to-be-welded member from falling off the welding groove.

Preferably, the at least one solder-receiving space is uniformly or dispersedly defined in the inner sidewall of the welding groove.

Preferably, a plurality of said solder-receiving spaces is distributed on a same cross section of the welding groove.

Preferably, when the at least one solder-receiving space is uniformly disposed inside the welding groove, the solder-receiving spaces are defined in pairs in the welding groove at a location of the same height.

Preferably, the distance between every two adjacent solder-receiving spaces on a same cross section is equal.

Preferably, the solder-receiving space is disposed at an intersection of a side and a bottom of the welding groove.

Preferably, the solder-receiving space includes a slot disposed in the inner sidewall of the welding groove.

Preferably, the inner sidewall of the welding groove is uneven to form the slot.

Preferably, the solder-receiving space includes a through hole passing through the inner sidewall of the welding groove and/or a blind hole defined in the inner sidewall of the welding groove.

Preferably, the welding base for the microwave device is formed by an extrusion or die casting process .

A microwave device uses a welding base as described above.

Compared with the prior art, the present invention has the following advantages.

According to the solution of the present invention, a solder-receiving space is defined in the inner side of the welding groove, and the solder-receiving space extends in a direction that is at an angle relative to the inner sidewall of the welding groove. Therefore, during welding, part of the solder enters the solder-receiving space, and after the solder is cooled and cured, the solder is trapped in the solder-receiving space. The solder is not easily detached from the welding groove, which solves the technical problem that the welding joint is not strong and the solder is easy to fall off in the existing microwave device welding scheme. The welding base for the microwave device of the invention has the characteristics of firm and reliable welding joints, thereby ensuring the reliability of the electrical connection of the microwave device. In addition, the welding base of for the microwave device has simple structure and is formed by an extrusion or die-casting process, and has good consistency and is convenient for mass production.

Additional aspects and advantages of the invention will be set forth in part in the description which follows.

### BRIEF DESCRIPTION OF THE DRAWINGS

In order to more clearly illustrate the technical solution in the embodiments of the present invention, the drawings used in the embodiments or the prior art description will be briefly described below. Obviously, the drawings in the following description are only some embodiments of the present invention, but the invention is not limited thereto.
Figure 1 is a schematic structural view of a welding base for a microwave device according to an embodiment of the present invention;
Figure 2 is a schematic structural view of a welding base for a microwave device according to another embodiment of the present invention;
Figure 3 is a schematic structural view of a welding base for a microwave device according to a further embodiment of the present invention; and
Figure 4 is a schematic structural view of a microwave device according to an embodiment of the present invention.

### DETAILED DESCRIPTION OF THE INVENTION

The invention is further described in the following with reference to the drawings and exemplary embodiments, which are illustrated in the accompanying drawings, in which the same or similar reference numerals are used to refer to the same or similar elements or elements having the same or similar functions. The embodiments described below with reference to the drawings are intended to be illustrative of the invention and are not to be construed as limiting. Further, if a detailed description of a known technique is not necessary to show the features of the present invention, it will be omitted.

Specific embodiments of the invention are described in detail below.

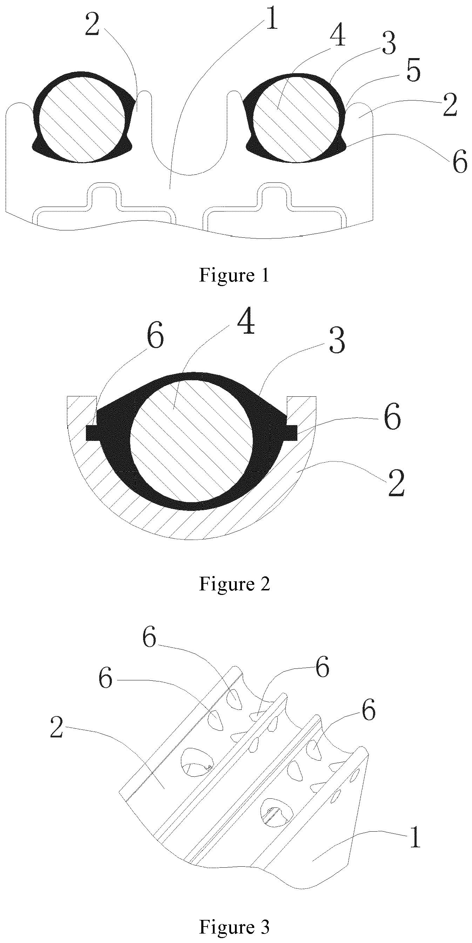

In one embodiment of the present invention, and particularly referring to Figure 1 which is a partial schematic view of a preferred embodiment of a welding base for a microwave device of the present invention, showing the structure of a welding base for a microwave device at a welding joint.

A welding base for a microwave device (hereinafter referred to as "welding base") includes a cavity 1 and a welding groove 2 and at least one solder-receiving space 6. The welding groove 2 is defined in the cavity 1 for accommodating a to-be-welded member 4, and the to-be-welded member 4 is welded to an inner sidewall 5 of the welding groove 2 using solder 3. The solder-receiving space 6 is defined in the inner sidewall 5 of the welding groove 2 for forming physical interference structure with the inner sidewall of the welding groove after the solder is cooled and cured. The solder 3 is blocked in order to restrict the longitudinal movement of the solder, thereby preventing the solder 3 from falling out of the welding groove 2, and ensuring the reliability of the connection between the to-be-welded member and welding base.

When the to-be-welded member 4 is welded to the inner sidewall 5 of the welding groove 2 using the solder 3, because the solder-receiving space 6 is defined in the inner sidewall 5, when the solder 3 is in a molten state and covers the to-be-welded member 4 and the solder-receiving space 6, the solder 2 flows into the solder-receiving space 6, so that the solder 3 is partially fixed in the solder-receiving space 6 during curing. Thereby, the solder 3 is held in place, the longitudinal movement of the solder is blocked, and therefore, even if the solder is loosened at the welding joint, it would not fall off from the welding groove 2, hence improving the reliability of the connection between the welding base and the to-be-welded member.

Preferably, in application, in order to improve the welding effect, the welding groove may be plated and sprayed with a weldable material to enable better connection between the inner sidewall of the welding groove and the solder.

Referring to figures 2-3, furthermore, in an embodiment of the present invention, the at least one solder-receiving space 6 is uniformly or dispersedly disposed on the inner sidewall 5 of the welding groove 2.

Specifically, when the at least one solder-receiving space 6 is uniformly disposed on the inner sidewall of the welding groove 2, a plurality of the solder-receiving spaces 6 is distributed on a same cross-section of the welding groove 2. The solder-receiving spaces 6 are defined in pairs in the welding groove 2 at a location of the same height. Preferably, the distance between every two adjacent solder-receiving spaces on a same cross section is equal.

Preferably, the solder-receiving space 6 is disposed at an intersection of a side and a bottom of the welding groove 2.

In an embodiment of the present solution, the solder-receiving space 6 is at least one of a slot defined in the inner sidewall 5 of the welding groove 2, a through hole and a blind hole defined in the sidewall of the welding groove 2.

Preferably, the inner sidewall 5 of the welding groove 2 is uneven to form the slot.

The welding base for a microwave device of the invention has simple structure, and the cavity 1 and the welding groove 2 can be formed by a process such as extrusion, die casting, etc., which is advantageous for mass production.

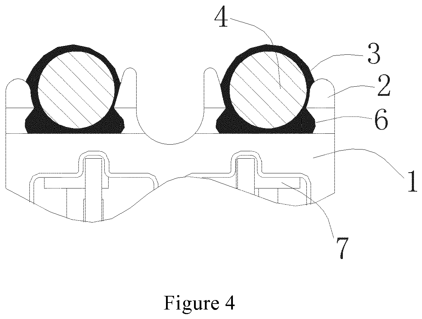

Furthermore, as shown in figure 4, the present invention also relates to a microwave device using a welding base as described above, wherein a microwave network 7 of the microwave device is disposed in the cavity 1. Due to use of the welding base for a microwave device, in the microwave device of the present invention, the connection between the welding base and the to-be-welded member is firm and reliable, thereby making the signal transmission of the microwave device safe, stable and reliable.

While the invention has been described in detail, the embodiments of the invention may be practiced without these details. In some embodiments, well-known methods, structures, and techniques have not been shown in detail so as not to obscure the understanding of the present specification.

While some exemplary embodiments of the invention have been shown in the foregoing, however, it will be understood by those skilled in the art that the present invention may be modified without departing from the spirit and scope of the invention. The scope of the invention is defined by the claims and their equivalents.

## Claims

1. A welding base for a microwave device, comprising a cavity and a welding groove defined in the cavity, wherein an inner side wall of the welding groove is provided with at least one solder-receiving space, and the solder-receiving space extends in an angle relative to an inner side of the welding groove.

2. The welding base for a microwave device as recited in claim 1, wherein the at least one solder-receiving space is uniformly or dispersedly defined in the inner sidewall of the welding groove.

3. The welding base for a microwave device as recited in claim 2, wherein a plurality of said solder-receiving spaces is distributed on a same cross section of the welding groove.

4. The welding base for a microwave device as recited in claim 2, wherein when the at least one solder-receiving space is uniformly defined in the inner sidewall of the welding groove, the solder-receiving spaces are defined in pairs in a pair of the inner sidewalls of the welding groove.

5. The welding base for a microwave device as recited in claim 4, wherein the distance between every two adjacent solder-receiving spaces on a same cross section is equal.

6. The welding base for a microwave device as recited in claim 1, wherein the solder-receiving space is disposed at an intersection of a side and a bottom of the welding groove.

7. The welding base for a microwave device as recited in claim 1, wherein the solder-receiving space includes a slot disposed in the inner sidewall of the welding groove.

8. The welding base for a microwave device as recited in claim 7, wherein the inner sidewall of the welding groove is uneven to form the slot.

9. The welding base for a microwave device as recited in claim 1, wherein the solder-receiving space includes a through hole passing through the inner sidewall of the welding groove and/or a blind hole defined in the inner sidewall of the welding groove.

10. The welding base for a microwave device as recited in claim 1, wherein the welding base for the microwave device is formed by an extrusion or die-casting process.

11. A microwave device comprising a welding base for a microwave device as recited in any one of claims 1-10.
